(19) **Europäisches Patentamt / European Patent Office / Office européen des brevets**

(11) **EP 4 678 779 A1**

(12) # EUROPEAN PATENT APPLICATION
published in accordance with Art. 153(4) EPC

(43) Date of publication:
**14.01.2026 Bulletin 2026/03**

(21) Application number: **24813831.5**

(22) Date of filing: **19.03.2024**

(51) International Patent Classification (IPC):
**C22C 38/50** (2006.01)   **B32B 15/01** (2006.01)
**C21D 8/02** (2026.01)

(52) Cooperative Patent Classification (CPC):
**B21B 1/38; B21B 37/58; B21B 37/74; B21B 47/00;
B32B 15/01; B32B 15/18; B32B 37/06;
B32B 37/10; B32B 38/00; C21D 8/02; C22C 38/02;
C22C 38/04; C22C 38/06; C22C 38/42;
C22C 38/44;**                                (Cont.)

(86) International application number:
**PCT/CN2024/082496**

(87) International publication number:
**WO 2024/244625 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.05.2023   CN 202310604637**

(71) Applicant: **BAOSHAN IRON & STEEL CO., LTD.**
**Shanghai 201900 (CN)**

(72) Inventors:
• **XING, Zhao**
  **Shanghai 201900 (CN)**
• **JIAO, Sihai**
  **Shanghai 201900 (CN)**
• **YAN, Bo**
  **Shanghai 201900 (CN)**
• **HAO, Yingmin**
  **Shanghai 201900 (CN)**
• **LIANG, Xiaojun**
  **Shanghai 201900 (CN)**
• **KONG, Wei**
  **Shanghai 201900 (CN)**

(74) Representative: **Maiwald GmbH**
**Elisenhof**
**Elisenstraße 3**
**80335 München (DE)**

(54) **500 MPA-GRADE HOT-ROLLED STRIP STEEL FOR BUILDING STRUCTURE RESISTANT TO SEA WAVE SPLASHING AREA CORROSION AND MANUFACTURING METHOD FOR HOT-ROLLED STRIP STEEL**

(57)     The present disclosure is directed to a hot-rolled strip steel for building structure and a manufacturing method therefor. The hot-rolled strip steel has a base layer, a corrosion-resistant layer, and an interfacial transition layer disposed between the base layer and the corrosion-resistant layer. The base layer comprises the following chemical elements in mass percentages: C: 0.050-0.100%, Si: 0.15-0.30%, Mn: 1.0-1.8%, P: 0.0005-0.0030%, S: 0.0005-0.0100%, Cr: 0.80-1.60%, Ni: 0.50-1.20%, Cu: 0.20-0.40%, Al: 0.020-0.050%, Ti: 0.010-0.018%, Nb: 0.020-0.100%, N: 0.0005-0.0050%, and Mo: 0.20-0.50%, with the balance being Fe and other inevitable impurities. The corrosion-resistant layer is made of industrial pure titanium. For the hot-rolled strip steel for building structure according to the present disclosure, the base layer has a yield strength of ≥ 500 MPa, a tensile strength of ≥ 640 MPa, a yield-to-tensile ratio of 0.75 to 0.85, and an impact energy at -40 °C of ≥ 190 J; the corrosion-resistant layer has a corrosion rate against sea wave splash of ≤ 0.006 mm/year. The interfacial transition layer has a thickness ≤ 8 μm and an interfacial shear strength of ≥ 263 MPa.

Figure 1

(52) Cooperative Patent Classification (CPC): (Cont.)
     **C22C 38/48; C22C 38/50; C22C 38/58; C22F 1/18**

**Description**

**TECHNICAL FIELD**

The present disclosure is directed to steel for building structure and manufacturing method therefor, in particular to a hot-rolled strip steel for building structure resistant to corrosion in sea wave splash zone and manufacturing method therefor.

**BACKGROUND**

Traditional marine structural and equipment materials are primarily made of low strength steel. However, as the exploitation of marine resources progressively extends from shallow to deep waters, requirements for structural and equipment strength, toughness, and corrosion resistance are becoming increasingly stringent, urgently necessitating the application of new materials. The marine environment is an extremely harsh and complex corrosive environment. Seawater, being a strong electrolyte solution, contains a high concentration of chloride ions. As the main structure of marine engineering facilities, steel facilities are prone to electrochemical reactions with surrounding media and are severely corroded, greatly reducing the service life of these facilities. Especially in the sea wave splash zone, which represents the most severe corrosive area of the marine environment, various facilities are subjected to a series of external factors such as cyclic wet-dry conditions, sea spray, sunlight, corrosive atmospheric constituents, and oxygen, resulting in particularly severe corrosion of materials.

Surveys indicate that steel piles in facilities such as seaport terminals and offshore oil platforms undergo severe corrosion, usually 3-10 times higher than that in fully immersed seawater areas. Once severe localized corrosion damage occurs in the steel piles, it will greatly reduce the load-bearing capacity of the entire facility, shorten its service life, compromise operational safety, and even lead to premature decommissioning of the facility.

In the sea wave splash zone, the cyclic dry-wet conditions provide ample oxygen supply, while the resulting corrosion products offer no protective effect. Moreover, due to the splashing of seawater, seawater spray directly impinges on the metal surface, causing severe corrosion. Corrosion tests and survey results indicate that, under normal conditions, the average corrosion rate of ordinary carbon steel, low-alloy steel, etc. in marine atmosphere is about 0.03 to 0.08 mm/year, whereas in the sea wave splash zone, it reaches 0.3 to 0.5 mm/year. In the sea wave splash zone, steel piles are prone to severe corrosion damage, greatly reducing the load-bearing capacity of the entire steel structure and compromising operational safety, shortening service life, and leading to premature decommissioning.

Based on the aforementioned service conditions, industrial pure titanium is selected as the corrosion-resistant layer. Titanium exhibits high chemical reactivity and readily reacts with oxygen in air to form oxides. The oxide on the surface of titanium metal is dense, stable, and possesses a strong "self-healing" ability. The "self-healing" ability of titanium oxide primarily refers to the rapid formation of a new layer of titanium oxide film on a damaged surface of titanium material, which prevents corrosive media from further contact with titanium.

For steel used in marine building structure, in addition to meeting the requirements of corrosion resistance, it is also necessary to exhibit good mechanical properties, among which the yield-to-tensile ratio and low-temperature impact toughness are increasingly becoming key indicators of concern for building steel. The yield-to-tensile ratio is the ratio of the yield strength to the tensile strength of steel, which reflects the ability of steel to undergo plastic deformation without strain concentration. The lower the yield-to-tensile ratio, the more evenly the plastic deformation of the steel can be distributed over a wider range. The plastic deformation of a steel structure system made of steel with low yield-to-tensile ratio can be uniformly distributed over a wide range under seismic force; while materials with high yield-to-tensile ratio may experience strain concentration, reducing the overall plastic deformation ability of the steel, leading to brittle failure of the structure, thereby resulting in structural instability and sudden collapse.

Steel undergoes brittle transformation at low temperatures, and its fracture mode changes from ductile fracture to brittle fracture. Its engineering significance lies in the fact that when steel is used at temperatures higher than this, components will not undergo brittle fracture. Therefore, structural steel usually needs to have corresponding requirements for its low-temperature impact performance based on the material's service environment. The ocean temperature varies greatly at different latitudes. Taking the vicinity of Bohai Bay in China as an example, the winter coastal temperature can be -20 °C or less. This requires building materials to have good impact performance at -40 °C to ensure that brittle fracture does not occur.

However, when improving the ductility and toughness of steel, if the increase in tensile strength is small, the yield-to-tensile ratio will increase significantly, making it challenging to maintain a low yield-to-tensile ratio.

Japanese Patent Application JP2011167002A discloses a steel for marine structure with excellent corrosion resistance, through which painting costs can be reduced. The solution is to use coated steel with a specified coating thickness in the height direction area where the amount of airborne sea salt particles exceeds the specified boundary value, and to use uncoated steel in the height direction area where the amount of airborne sea salt particles is below the specified boundary value. In addition, the boundary value is 0.1 mdd or less. The steel for use without coating comprises: C: less than 0.08%, Si: 0.75% or less, Mn: 2.0% or less, P: 0.030% or less, S: 0.030% or less, Al: 0.01-0.05%, N: 0.010% or less; the steel comprises W: 0.50-1.0%, Nb: 0.010-0.200%, Cr: 0.01-0.10%; and the steel preferably comprises one or two selected from Cu: 0.05-0.50% and Ni: 0.05-0.50%. As marine structures, offshore structures, especially offshore wind power towers, are preferred. Thereby, the coating area is sharply decreased, thus reducing coating operations, shortening recoating time, and lowering coating costs. Although the patent application provides a marine steel structure, the steel structure is corrosion-resistant through painting.

Chinese Patent Application CN201210260231.7 discloses a method for manufacturing a titanium-steel-titanium double-sided clad plate. The method comprises: stacking four titanium plates and three steel plates in a specific sequence within a sealed frame formed by welding the two outermost steel plates, applying a separating agent - prepared by mixing 1 part by weight of active $\alpha$-$Al_2O_3$ and 1.5 parts by weight of 4% aqueous polyvinyl alcohol solution - between the titanium plates, and using a nickel-based alloy as a transition layer between the titanium and steel plates. The assembly is heated to 500-630 °C and vacuumed for 1-2 hours, with a vacuum degree of 20-200 Pa. It is characterized in that after assembling the slabs, welding is performed before vacuum pumping, and conventional arc welding and submerged arc welding suffice for the welding process. Compared to welding under vacuum conditions, the welding requirements are lower, the cost is lower, and there is no need to separately build a vacuum chamber. Subsequently, the composite slab is subjected to conventional heating furnace and rolled at a rolling temperature of 700-900 °C to achieve cladding. By sealing and welding the outermost steel plates and vacuuming, the carbon in the gas can be separated, while a nickel-based alloy isolation layer is applied to prevent the formation of TiC at the interface, resulting in a titanium-steel clad plate with a shear strength of 230-260 MPa and an interfacial bonding rate of 99.6-100%.

Chinese Patent Application CN201710769999.X discloses a method for manufacturing titanium-steel clad plate. The method comprises: selecting contacting surfaces of the titanium and steel composite slabs, applying a high-temperature-resistant, anti-carburization, and anti-nitridation isolation coating onto the contacting surfaces of titanium material, and drying at room temperature. After drying is completed, the titanium slabs are aligned and stacked in pairs with the steel slab placed therebetween to complete the assembly and obtain a composite slab. The thickness of the titanium plate used is greater than 2 mm, and the thickness of the steel plate is greater than 5 mm. The periphery of the composite slab is then seal-welded while leaving an unwelded portion of a specific size. The slab is vacuumed to $10^{-2}$-$10^{-3}$ Pa before welding. The slab is heated to 500-700 °C and rolled, wherein a first pass reduction rate is more than 25%, a last pass reduction rate is not more than 15%, a total reduction rate is 60-70%, and a rolling speed is 0.1-1.0 mm/s. The patent application achieves protection against diffusion of impurity elements and oxidation at high temperatures by employing a coating with high-temperature anti-permeation properties, which effectively blocks the diffusion of elements such as carbon and nitrogen. In the Examples, Q235 steel and TA1 titanium were bonded, and the resulting plates exhibited shear strengths of 176 MPa, 181 MPa, and 182 MPa.

The above two patent applications primarily avoid the formation of brittle Ti compounds by applying an additional nickel-based alloy isolation layer between titanium and carbon steel.

Chinese Patent Application CN201811327623.4 discloses a titanium-steel-titanium clad plate and manufacturing method therefor. The method comprises sandwiching a carbon steel plate between two titanium plates of the same size, followed by warm clad rolling using an irreversible high-rolling-force warm rolling mill to integrally bond the three layers. After rolling, the rolled clad plate is subjected to heat treatment, including primary annealing at 500-600 °C for 20-60 minutes and recrystallization annealing at 680-700 °C for 30-120 minutes. Finally, the product is obtained by straightening, leveling, shearing, and shaping. The patent application primarily describes a method for manufacturing a clad titanium steel plate without using hot-rolling cladding. However, due to the use of irreversible rolling mills, only single pass rolling production can be carried out, and heat treatment is also required. In the Examples, the main focus is on the production method of steel strip, and the performance of the product after cladding is not mentioned.

Chinese Patent Application CN201510543767.3 discloses a method for manufacturing titanium-steel clad plate. The bonding strength of the titanium-steel clad plate obtained by this method is high. The patent application involves: fixing a titanium plate between two ordinary carbon steel plates or slabs, welding the periphery of the assembly in a vacuum environment, heating the composite slab to 850-900 °C for 120-360 minutes, controlling the rolling process with a starting rolling temperature of 800 °C or more and a finishing rolling temperature of 700 °C or less, and controlling the deformation of each pass to 20-30% and a total deformation during rolling to $\geq$ 90%. This high-reduction rolling process serves to fracture brittle intermetallic compounds formed at the interface, thereby mitigating their adverse effects on the bonding interface. After rolling, the resulting titanium-steel clad plate achieves a bonding strength greater than 240 MPa. However, the patent application requires a high pass reduction rate and total deformation, which can easily lead to edge weld cracking and damage the vacuum degree during the rolling process, making it unsuitable for interfacial bonding.

Chinese Patent Application CN201610994234.1 discloses a method for manufacturing titanium-steel clad plate, involving an annealing technique for the method for manufacturing titanium steel plate. Firstly, the titanium plate and steel plate are assembled to form a symmetrical multi-layer composite slab with a structure of steel plate-titanium plate-separating agent-titanium plate-steel plate. The cladding is carried out by roll cladding or explosive cladding. The slab after cladding is annealed and pickled using a continuous annealing and pickling line. It is first heated to 500-750 °C to recrystallize the core titanium plate, and then heated to 950-1050 °C to recrystallize the base steel plate. The purpose of the patent application is to simultaneously achieve the properties of cladding materials and substrate through two-stage heat treatment. However, the two-stage heat treatment can lead to excessive diffusion of elements titanium, iron, and carbon, resulting in intermetallic compounds of iron and titanium and brittle materials such as titanium carbide, which degrade the interfacial shear strength.

Chinese Patent Application CN201710996925.X discloses a thin-clad double-sided titanium-steel clad plate and manufacturing method therefor. The method achieves good cladding between the titanium and steel by using thick slab assembly and high-reduction rolling technology. The patent application is directed to a double-sided titanium clad plate composed of a titanium cladding layer, a base layer, and a titanium cladding layer. The titanium cladding layer is made of TA2, wherein the titanium cladding layer has a thickness of 0.2-1 mm. The slab assembly is stacked centrally in the following top-to-bottom sequence: cover plate, titanium cladding material, carbon steel substrate, titanium cladding material, and cover plate. After extracting vacuum in a vacuum chamber, the peripheral seams of the assembly are seal-welded by vacuum electron beam, with a vacuum degree of $1.0 \times 10^{-2}$-$4.5 \times 10^{-2}$ Pa. The seal-welded composite slab is heated to 900-920 °C and held for a time period, which is calculated as 1 min/mm $\times$ total thickness of composite slab. The starting rolling temperature is 880-900 °C, and the finishing rolling temperature is 800 °C or more, followed by air cooling to room temperature. The single pass reduction rate is $\geq$ 15%, the first three pass reduction rates are $\geq$ 20%, and the total reduction rate is $\geq$ 80%. The clad plate obtained after rolling is subjected to trimming, plate splitting, and surface grinding to obtain a double-sided titanium-steel clad plate. In the patent application, through surface cleaning treatment of the composite slab, the covering and air-isolating effect of the cover plates, controlled rolling temperature and the application of high reduction rates, the iron-titanium and titanium-carbon compounds formed at the clad interface are fractured, refined, and dispersed within the clad interface. This improves the distribution state of the compounds, further ensuring the bonding quality and performance stability, resulting in a shear strength of 241 MPa.

Chinese Patent Application CN201710983322.6 discloses a thin-clad titanium-steel clad plate and manufacturing method therefor, which adopts a double-layer structure of cladding titanium and carbon steel. The slab assembly approach and heating process are similar to those in Chinese Patent Application CN201710996925.X, with a starting rolling temperature of 880-900 °C, a single pass reduction rate of 25-30%, and a total reduction rate of $\geq$ 85%. While controlling the single pass reduction rate and total reduction rate, the thickness of the titanium-steel clad plate is limited to 3 to 16 mm. The finishing rolling temperature is 800 °C or more, followed by air cooling to room temperature. The titanium-steel clad plate is obtained through surface treatment, with the titanium cladding layer having a thickness of $\leq$ 1 mm. The patent application enhances the bonding quality by employing a symmetric slab assembly method and encapsulating the titanium within the carbon steel plates through seal welding. After rolling, the steel plate achieves a shear strength of 238 MPa or more, and the clad interfacial bonding rate is 100%. The carbon steel layer meets the requirements of the Chinese national standard for Q345 grade carbon steel.

However, the aforementioned two patent applications do not specify the detailed design of the cladding and base layers and only describe the tensile properties and shear strength. The required pass reduction rate and total reduction rate for the cladding layer are relatively high, and no control is exercised over performance indicators such as corrosion resistance of the material and low-temperature impact performance and yield-to-tensile ratio of the base layer material, which do not meet the requirements for steel used in building structures.

In summary, the above patent applications primarily describe methods for manufacturing clad steel plates, and the specific embodiments provide only brief explanations regarding performance aspects such as interfacial shear strength and tensile properties. The steel used for the steel structure of sea wave splash zone should not only be resistant to corrosion in sea wave splash zone but also ensure that it meets the necessary structural steel performance requirements, as well as the low yield-to-tensile ratio and corresponding low-temperature impact performance as mentioned above to ensure structural safety. However, the products involved in the above patent applications are all at a strength level of 345 MPa, which cannot meet the use requirements for high-strength structural components. Moreover, the above patent applications do not include relevant compositional or process designs for achieving properties such as corrosion rate, yield-to-tensile ratio, and low-temperature impact of the corrosion-resistant layer, which cannot guarantee that they will satisfy the use requirements for steel plates used in the steel structure with high corrosion resistance and high strength in the environment of sea wave splash zone.

## SUMMARY OF INVENTION

In view of the above shortcomings of prior arts, the purpose of the present disclosure is to provide a hot-rolled strip steel for building steel structure and manufacturing method therefor. The hot-rolled strip steel for building steel structure according to the present disclosure can meet the corresponding strength level requirements for the mechanical properties of the base layer (carbon steel) without reducing the corrosion resistance of the corrosion-resistant layer, and the base layer exhibits excellent yield-to-tensile ratio and low-temperature impact toughness.

Therefore, in one aspect, the present disclosure provides a hot-rolled strip steel for building structure, comprising a base layer, a corrosion-resistant layer, and an interfacial transition layer disposed between the base layer and the corrosion-resistant layer.

The base layer comprises, in addition to Fe and other inevitable impurities, the following chemical elements in mass percentages: C: 0.050-0.100%, Si: 0.15-0.30%, Mn: 1.0-1.8%, P: 0.0005-0.0030%, S: 0.0005-0.0100%, Cr: 0.80-1.60%, Ni: 0.50-1.20%, Cu: 0.20-0.40%, Al: 0.020-0.050%, Ti: 0.010-0.018%, Nb: 0.020-0.100%, N: 0.0005-0.0050%, and Mo: 0.20-0.50%;

The corrosion-resistant layer is made of industrial pure titanium, preferably TA1, TA2, TA3, or TA4.

Preferably, the chemical composition of the base layer further satisfies the following relationships:

$$0.9\% \leq Cu+Ni \leq 1.45\%;$$

and

$$2(C+N) \leq Ti+Nb+Cr+Mo \leq 1.90\%.$$

Preferably, the base layer comprises the following chemical elements in mass percentages: C: 0.050-0.100%, Si: 0.15-0.30%, Mn: 1.0-1.8%, P: 0.0005-0.0030%, S: 0.0005-0.0100%, Cr: 0.80-1.60%, Ni: 0.50-1.20%, Cu: 0.20-0.40%, Al: 0.020-0.050%, Ti: 0.010-0.018%, Nb: 0.020-0.100%, N: 0.0005-0.0050%, and Mo: 0.20-0.50%, with the balance being Fe and other inevitable impurities.

Preferably, the base layer has a microstructure of granular bainite and/or lath bainite, with an effective grain size of $\leq 10~\mu m$.

Preferably, the base layer has a yield strength of $\geq 500$ MPa, a tensile strength of $\geq 640$ MPa, a yield-to-tensile ratio of 0.75 to 0.85, and an impact energy at -40 °C of $\geq 190$ J.

Preferably, the corrosion-resistant layer has a microstructure of single-phase, equiaxed $\alpha$-Ti.

Preferably, the corrosion resistance layer has a corrosion rate against sea wave splash of $\leq 0.006$ mm/year.

Preferably, the interfacial transition layer has a thickness of $\leq 8~\mu m$ and an average grain size of 15 to 40 $\mu m$, the interfacial transition layer comprises precipitated particles of (Ti,Nb)C smaller than 120 nm, and an interfacial shear strength is $\geq 263$ MPa.

The interfacial transition layer of the hot-rolled strip steel of the present disclosure exhibits 100% metallurgical bonding, with atoms exhibiting a high degree of coherency. The grains of the interfacial transition layer structure are fine (with an average grain size of 15 to 40 $\mu m$).

Preferably, the hot-rolled strip steel for building structure has a thickness of 3 to 16 mm.

For the hot-rolled strip steel for building structure according to the present disclosure, the base layer has a yield strength of $\geq 500$ MPa, a tensile strength of $\geq 640$ MPa, a yield-to-tensile ratio of 0.75 to 0.85, and an impact energy at -40 °C of $\geq 190$ J; the corrosion-resistant layer has a corrosion rate against sea wave splash of $\leq 0.006$ mm/year; the interfacial transition layer has a thickness $\leq 8~\mu m$, and an interfacial shear strength is $\geq 263$ MPa. The hot-rolled strip steel of the present disclosure can meet the corrosion resistance requirements in the environment of sea wave splash zone and meanwhile exhibits good mechanical properties in resisting corrosion in sea wave splash zone as well as high economy, which can be applied to steel structural components such as steel piles in facilities such as seaport terminals and offshore oil platforms.

The present disclosure adopts a low-carbon microalloyed composition design, which achieves excellent bonding between titanium and carbon steel without the addition of a metal isolation layer and effectively controls the thickness of the interfacial transition layer, such that the mechanical properties of base layer (carbon steel) can also meet the corresponding strength level requirements without reducing the corrosion resistance *per se* of the corrosion-resistant layer, and the base layer exhibits excellent yield-to-tensile ratio and low-temperature impact toughness.

In another aspect, the present disclosure provides a method for manufacturing the above hot-rolled strip steel for building structure, comprising the following steps in sequence:

1) smelting and casting
smelting and casting to give slabs for the base layer and the corrosion-resistant layer, based on the components of the base layer and the corrosion-resistant layer as defined above;
2) assembling slabs
grinding and polishing surfaces of the slabs for the base layer and the corrosion-resistant layer, and performing peripheral weld sealing along contact surfaces of the slabs to form a composite slab comprising the base layer and the corrosion-resistant layer; performing a vacuum treatment to a bonding interface after weld sealing;
3) heating and rolling the composite slab to form a steel strip, wherein:

the composite slab is heated to 900-1000 °C;

rough rolling is performed at a temperature of ≥ 880 °C; finish rolling is performed at a temperature of 760 to 850 °C, preferably 780 to 850 °C; a pass reduction rate is 5% to 20%, preferably 10% to 20%; and a cumulative reduction rate is ≥ 88%;

4) Cooling

after exiting a rolling mill stand, cooling the steel strip at a cooling rate of 10 to 25 °C/s to 300 to 450 °C, and then coiling at this temperature to produce the hot-rolled strip steel.

Preferably, in step 2), the thickness of the corrosion-resistant layer is 1% to 10% of the thickness of the composite slab.

Preferably, in step 3), the interfacial transition layer formed between the base layer and the corrosion-resistant layer has a thickness of ≤ 8 μm.

Through the manufacturing method according to the present disclosure, especially the control of heating, rolling, and cooling processes, the base layer in the strip steel exhibits excellent yield-to-tensile ratio and low-temperature impact toughness, meanwhile the corrosion-resistant layer exhibits excellent corrosion resistance and high bonding strength.

**BRIEF DESCRIPTION OF DRAWINGS**

Figure 1 is a schematic diagram of the interlayer structure of hot-rolled strip steel for building structure according to one embodiment of the present disclosure.

Figure 2 is a schematic diagram of the interlayer structure of hot-rolled strip steel for building structure according to another embodiment of the present disclosure.

Figure 3 is a micrograph of the microstructure of the corrosion-resistant layer in Example 3.

Figure 4 is a scanned image of the interfacial transition layer disposed between the base layer and the corrosion-resistant layer in Example 3.

Figure 5 is a micrograph of the microstructure of the base layer in Example 3.

**DETAILED DESCRIPTION**

Unless defined otherwise, all technical and scientific terms used herein have the same meanings as commonly understood by those skilled in the art to which the present disclosure pertains. The terminology used in the present disclosure is intended only for the purpose of describing specific embodiments and is not intended to limit the present disclosure.

Herein, the term "industrial pure titanium" refers to dense metallic titanium with a titanium content of not less than 99% and containing small amounts of impurities such as iron, carbon, oxygen, nitrogen, and hydrogen. "TA1, TA2, TA3, and TA4" designate grades of industrial pure titanium. This grading standard is based on GB/T 3620.1-2016 *"Designation and composition of titanium and titanium alloys",* which categorizes pure titanium based on its purity level (i.e., impurity content).

Herein, the term "yield-to-tensile ratio" refers to the ratio of the yield strength to the tensile strength of steel material, which reflects the ability of steel material to undergo plastic deformation without strain concentration.

Herein, the yield strength and tensile strength are measured in accordance with GB/T 6396-2008 *"Clad steel plates - Mechanical and technological test"* and GB/T 228-2010 *"Metallic materials - Tensile testing - Method of test at room temperature".*

Herein, the impact energy at -40 °C $KV_2$ in J (machine direction) is measured in accordance with GB/T 6396-2008 *"Clad steel plates - Mechanical and technological test"* and GB/T 229-2020 *"Metallic materials-Charpy pendulum impact test method".*

Herein, the grain size rating is carried out as follows: in accordance with GB/T 6394-2017 *"Determination of estimating the average grain size of metal",* the intercept method is used to grade the grain size of ferrite structure in stainless steel and carbon steel, respectively.

Herein, corrosion rate against sea wave splash is measured as follows: the coupon specimen of clad steel plate is placed in the sea wave splash zone of South China Sea for 6 months, after which corrosion conditions are observed and recorded. The coupon is first cleaned and weighed. The loss volume is calculated by dividing the loss weight by the density. The loss thickness is then determined by dividing the loss volume by exposed area of the coupon.

Herein, the interfacial shear strength is measured in accordance with GB/T 6396-2008 *"Clad steel plates - Mechanical and technological test".*

Herein, the metal in the base layer and the corrosion-resistant layer undergoes recrystallization and grain growth under high temperature and high pressure, during which some grains pass through the interface. Meanwhile, due to the difference in element content on both sides of the interface, metal elements will diffuse from areas with high concentration to areas with low concentration at high temperatures. The above two factors work together to form the interfacial transition layer.

In the compositional design of base layer of hot-rolled strip steel for building steel structure according to the present disclosure:

C: Carbon (C) serves a solid solution strengthening role in steel, significantly enhancing its strength. However, excessively high C content adversely affects welding performance and toughness. More critically, when the C content is too high, C will diffuse towards the clad interface, forming a large number of large particle TiC hard phases in the interfacial transition layer, which reduces the strength of the clad interface. Thus, a low C content is required to ensure the shear strength of the interface. Variations in C content have a lesser impact on the yield strength of steel compared to its effect on tensile strength. Therefore, appropriately increasing the carbon content, while ensuring the formability and weldability of the product, helps to reduce the yield-to-tensile ratio of steel. Based on this, in the base layer composition according to the present disclosure, the C content is controlled in the range of 0.050-0.100%.

Si: The addition of silicon (Si) element to steel can effectively deoxidize, thereby improving the purity of the steel. Furthermore, Si element contributes to solid solution strengthening in steel, enhancing the strength and hardness of steel. However, excessive high content of Si element adversely affects the welding performance of the material. Therefore, in the base layer composition according to the present disclosure, the Si content is controlled in the range of 0.15-0.30%.

Mn: Manganese (Mn) is the most cost-effective element for strengthening the matrix, which can lower the austenite transformation temperature, delay pearlite transformation, refine ferrite grains, and improve the strength of steel. Meanwhile, Mn can also eliminate the influence of S on steel. However, excessively high Mn content may easily lead to segregation bands and martensitic structure, which is detrimental to the toughness of the steel. Therefore, in the base layer composition according to the present disclosure, the Mn content is controlled in the range of 1.0-1.8%.

Al: Aluminum (Al) is primarily added in excess to steel as a deoxidizing element to ensure that the O content in the steel is as low as possible. The residual Al after deoxidation combines with N in the steel to form AlN precipitates. AlN hinders the growth of austenite grains during heating, refines austenite grains, and improves strength and toughness of matrix. Meanwhile, the formation of AlN immobilizes a portion of the N in the matrix, reducing the diffusion of interstitial atoms N from the carbon steel base layer to the clad interface and the formation of hard TiN in the interfacial transition layer (which deteriorates the interfacial shear strength of the clad plate). Meanwhile, it can reduce the amount of Ti and Nb added and lower the total cost. Based on this, in the base layer composition according to the present disclosure, the Al content is controlled in the range of 0.020-0.050%.

Ti: Titanium (Ti) forms stable TiN or Ti(N,C) at high temperatures, which immobilize C and N and prevent interstitial C and N atoms in the carbon steel base layer from diffusing towards the interface and forming hard TiN or Ti(C,N) precipitates in the interfacial transition layer, thereby obtaining a clad plate with high interfacial shear strength. Meanwhile, TiN hinders the growth of austenite during heating, refines austenite grains, and improves strength and toughness of the matrix. In the subsequent use of welding, TiN, especially in the heat affected zone (HAZ) adjacent to the molten boundary of the weld, suppresses the growth of austenite grains, thereby improving the toughness of welded HAZ. This enables the material to accommodate high heat-input welding processes. Reducing the diffusion of C and N towards the interface can improve the strength of low-carbon matrix and obtain clad plates with high interfacial shear strength. Based on this, in the base layer composition according to the present disclosure, the Ti content is controlled in the range of 0.010-0.018%.

Nb: Niobium (Nb) exists in steel in the form of solid solution Nb and Nb(C, N) and contributes to solid solution dragging and precipitation pinning during recrystallization. The addition of a small amount of Nb to the base layer carbon steel is primarily to increase the recrystallization temperature, such that the grain size in the base layer carbon steel can be refined after rolling in the recrystallized and non-recrystallized zones, which is beneficial for improving the low-temperature impact toughness of the base layer carbon steel. Due to the effect of Nb(C, N) precipitates, the prior austenite grains become finer, promoting the formation of finer recrystallized grains and achieving an ideal combination of high strength and toughness. Meanwhile, Nb can immobilize the interstitial C and N atoms in the matrix, reduce the diffusion of C and N towards the interface, and obtain a clad plate with high interfacial shear strength. Based on this, in the base layer according to the present disclosure, the Nb content is controlled in the range of 0.020-0.100%.

Cu: Copper (Cu) plays a role in solid solution strengthening, and with the increase of Cu content, the room-temperature impact toughness of steel slightly improves. Therefore, in the base layer composition according to the present disclosure, the Cu content is controlled in the range of 0.20-0.40%.

N: Nitrogen (N) element can form second phase particles with Ti and Al, refining austenite grains and improving strength and toughness of the matrix. However, when the N content is excessively high, a large amount of TiN is generated and the particles are too coarse, which may affect the plasticity and toughness of carbon steel. Based on this, in the base layer according to the present disclosure, N content is controlled in the range of 0.0005-0.0050%.

Ni: Nickel (Ni) improves the hardenability of base layer carbon steel, thereby obtaining a fully bainitic structure. As an austenite-stabilizing element, it also promotes the development of stable martensite-austenite (M-A) islands within the granular bainites during the coiling process, greatly improving the low-temperature impact toughness and plasticity of steel. Meanwhile, Ni can effectively prevent the diffusion of Ti into the base layer carbon steel, which helps to control the thickness of interfacial transition layer. Moreover, the combined use of Ni, Cr, and Mo improves the corrosion resistance of base layer carbon steel. However, nickel is expensive, and excessive addition would increase the cost of clad plate. Based on this, an appropriate amount of Ni is added in the base layer composition according to the present disclosure, and Ni content is controlled in the range of 0.50-1.20%.

Cr: Chromium (Cr) is a strong carbide-forming element with a relatively low diffusion rate in austenite, while it also hinders the diffusion of C element. During the low-temperature processes, Cr and C form small carbides, which play a role in precipitation strengthening. Meanwhile, Cr can immobilize interstitial C and N atoms in the matrix, reduce the diffusion of C and N towards the interface, and obtain clad plates with high interfacial shear strength. However, while Cr increases the matrix strength of steel, it also reduces its toughness. Therefore, to achieve an optimal balance between strength and toughness, in the base layer composition according to the present disclosure, the Cr content is controlled in the range of 0.80-1.60%.

Mo: In the base layer according to the present disclosure, molybdenum (Mo) can significantly refine the grains, improve the strength and toughness of the matrix, and form stable carbides with C, thereby enhancing the strength of the base layer. Meanwhile, Mo can improve the hardenability of the base layer carbon steel, which is beneficial for the formation of the bainite microstructure in base layer. Based on this, in the base layer according to the present disclosure, an appropriate amount of Mo can be added, and the mass percentage of Mo element is controlled in the range of 0.20-0.50%.

In the hot-rolled strip steel for building structure of the present disclosure, both sulfur (S) and phosphorus (P) are inevitable impurity elements, and their content should be kept as low as possible. However, considering the practical steelmaking capabilities of the steel plant, in the base layer composition according to the present disclosure, the contents of S and P are controlled to: P: 0.0005-0.0030% and S: 0.0005-0.0100%.

In addition, in the chemical composition design of the base layer of hot-rolled strip steel for building structure according to the present disclosure:

Both Cu and Ni can enhance the toughness of the base layer and their combined addition exhibits a particularly notable effect. Meanwhile, the addition of Ni element can reduce the diffusion rate of C in steel and decrease the diffusion of C towards the interface. Therefore, to achieve better performance, in the base layer composition according to the present disclosure, contents of Cu and Ni are preferably designed to satisfy: $0.9\% \leq Cu+Ni \leq 1.45\%$, which helps to control the interfacial transition layer within 8 $\mu$m.

Ti, Nb, Cr, and Mo are all strong carbonitride-forming elements that can form corresponding carbonitrides in the base layer carbon steel. This can immobilize the interstitial atoms in the base layer, hindering the diffusion of C and N interstitial atoms to the interface and the formation of large, aggregated carbonitrides in the interfacial transition layer, which helps to control the interfacial transition layer to within 8 $\mu$m, thereby improving the interfacial shear strength. Meanwhile, Ti, Nb, and Cr contribute to refining grains and improving the toughness of the base layer carbon steel at different stages of hot rolling processing. Therefore, to achieve better performance, in the base layer composition according to the present disclosure, contents of Ti, Nb, Cr, and Mo are preferably designed to satisfy: $2(C+N) \leq Ti+Nb+Cr+Mo \leq 1.90\%$.

The corrosion-resistant layer of the present disclosure is made of industrial pure titanium, preferably TA1, TA2, TA3, and TA4, and the composition of which conforms to the standard GB/T3620.1-2016 *"Designations and Chemical Composition of Titanium and Titanium Alloys"*.

The method for manufacturing the hot-rolled strip steel for building structure according to the present disclosure comprises the following steps in sequence:

1) Smelting and casting
smelting and casting to give slabs for the base layer and the corrosion-resistant layer, based on the components of the base layer and the corrosion-resistant layer as defined above;
2) assembling slabs
grinding and polishing surfaces of the slabs for the base layer and the corrosion-resistant layer, and performing peripheral weld sealing along contact surfaces of the slabs to form a composite slab comprising the base layer and the corrosion-resistant layer; and performing a vacuum treatment to a bonding interface after weld sealing;
3) heating and rolling the composite slab to form a steel strip, wherein:

the composite slab is heated to 900-1000 °C;
rough rolling is performed at a temperature of $\geq 880$ °C; finish rolling is performed at a temperature of 760 to 850 °C; a pass reduction rate is 5% to 20%; a cumulative reduction rate is $\geq 88\%$; no descaling water is used, and an insulation cover is applied;

4) Cooling

after exiting a rolling mill stand, cooling the steel strip at a cooling rate of 10 to 25 °C/s to 300 to 450 °C, and then coiling at this temperature to produce the hot-rolled strip steel.

Preferably, in step 2), a thickness of the corrosion-resistant layer is 1% to 10% of the thickness of the composite slab.

Preferably, in step 3), the pass reduction rate used during rolling is 10% to 20%.

In the manufacturing method according to the present disclosure:

1) Smelting: P and S elements will deteriorate the fracture toughness of steel. Thus, control of low P and low S levels is essential during the steelmaking process to improve the quality of the steel slabs. Preferably, clean steel production technology is adopted to reduce the content of gases and inclusions in steel, thereby enhancing the comprehensive performance of the steel material, especially enhancing its resistance to laminar tearing.

2) Assembling slabs: preferably, the thickness of the corrosion-resistant layer is 1% to 10% of the total thickness of the composite slab. The corrosion-resistant layer and the base layer carbon steel slabs are pre-treated, peripheral weld sealing is performed along the contact surfaces of the slabs, and a vacuum treatment is performed to the bonding interface after weld sealing. The vacuum treatment can protect the surface of the corrosion-resistant layer from oxidation and is also an important factor in ensuring the corrosion resistance of the corrosion-resistant layer in the sea wave splash zone.

3) Heating: for a single carbon steel, the heating temperature of the slab is generally controlled in the range of 1000 to 1250 °C, which is conducive to the dissolution and full diffusion of precipitates in the steel, promotes the homogenization of slab elements, and enhances the strengthening effect of microalloying elements in the steel. For a single industrial pure titanium plate, the heating temperature is generally controlled in the range of 850 to 1000 °C. If the heating temperature is too high, a β-phase transformation will occur, and the β phase will rapidly grow, deteriorating the performance of the industrial pure titanium. A high heating temperature allows for sufficient diffusion of elements, promoting the subsequent achievement of 100% metallurgical bonding at the interface. However, excessively high heating temperatures increase the tendency of austenite grains to coarsen, making subsequent controlled rolling more difficult. More critically, it accelerates the diffusion of C, N, Ti, and Fe towards the interface, forming thick brittle precipitates and intermetallic compounds at the interface, which results in a thickened interfacial transition layer and deteriorates interfacial shear strength. Considering the above factors, the heating temperature in the method of the present disclosure is controlled in the range of 900 to 1000 °C.

4) Rolling: the rough rolling temperature should be controlled to be 880 °C or more. Under a high reduction rate in high temperature zone, the microstructure undergoes sufficient recrystallization, resulting in grain refinement and improved material strength and toughness. The pass reduction rate is maintained in the range of 5% to 20%, with a cumulative reduction rate of ≥ 88%. Controlled rolling is carried out in the non-recrystallized zone, during which austenite recrystallization no longer occurs. By accumulating deformation energy and deformation dislocations through reasonable reduction rate and finishing rolling temperature, high-density deformation bands are formed within the austenite grains. This increases the nucleation sites for phase deformation and further refines the effective grain size of the matrix after phase transformation, thereby improving strength and toughness of the material. Meanwhile, deformation induces the precipitation of carbonitrides of Nb, Ti, and Cr at this stage, which enhances the strength of the matrix, suppresses the diffusion of C towards the interface, and prevents the deterioration of interfacial shear strength due to the formation of excessively thick TiC at the interface. Preferably, the finishing rolling temperature is controlled in the range of 760 to 850 °C, such that granular bainite and/or lath bainite with an effective grain size of 10 μm or less can be obtained while ensuring the corrosion performance of titanium. During the rolling process, only a metallurgical bond and necessary dimensional changes occur between the corrosion-resistant layer and the base layer, without any alteration in the composition of the corrosion-resistant layer and the base layer.

5) Cooling: the type and size of the post-rolling microstructure are controlled by the start-cooling temperature, the finish-cooling temperature, and the cooling rate. Excessively high cooling rates will lead to the formation of martensite. Martensite phase is a low toughness and high yield-to-tensile-ratio structure, adversely affecting the properties of the steel plate. Excessively slow cooling rates will lead to the formation of a large amount of coarse ferrite structure. Coarse ferrite structure facilitates crack propagation and leads to a deterioration in impact performance. Thus, the cooling rate should be reasonably controlled. The control of finishing rolling temperature can avoid the formation of ferrite, which reduces the strength of the base layer. Meanwhile, rapid cooling after rolling to the phase transformation temperature further inhibits grain growth. The strength and low-temperature impact toughness of the material are enhanced through refinement of grains. Preferably, water cooling is used for cooling, with a cooling rate controlled in the range of 10 to 25 °C/s and a finish-cooling temperature controlled in the range of 300 to 450 °C, ensuring that the base layer has a low yield-to-tensile ratio and high low-temperature impact toughness.

If the corrosion-resistant layer is too thick, it will affect the mechanical properties and production cost of the material. If the corrosion-resistant layer is too thin, it will reduce the corrosion resistance and service life of the material. Preferably, the thickness of the corrosion-resistant layer is controlled to be 1% to 10% of the total thickness of the composite slab during the assembly process.

Through cladding the corrosion-resistant layer with the base layer, along with optimized composition design and their thickness ratio, a corrosion-resistant layer resistant to sea wave splash zone corrosion is formed on the surface of the base layer (i.e., carbon steel plate) by rolling process, ultimately forming a hot-rolled strip steel for building structure according to the present disclosure that is resistant to sea wave splash zone corrosion, and has good mechanical properties as well as high economic efficiency. Further processing the strip steel into structural components enables its effective application in steel structural components used in environments of sea wave splash zone.

Compared with existing technologies, the hot-rolled strip steel for building structure according to the present disclosure offers the following beneficial effects:

The hot-rolled strip steel for building structure according to the present disclosure adopts a low-carbon microalloying composition design, which achieves excellent bonding between titanium and carbon steel without adding a metal isolation layer, and effectively controls the thickness of the interfacial transition layer. This enables the mechanical properties of the base layer (carbon steel) to meet the corresponding strength grade requirements without reducing the corrosion resistance of the corrosion-resistant layer, and the base layer exhibits excellent yield-to-tensile ratio and low-temperature impact toughness.

In the hot-rolled strip steel for building structure of the present disclosure, the formation of TiC compounds in the interfacial transition layer and carbonitrides in the base layer are reduced by reducing the C content, therefore grain growth is hindered, and the low-temperature impact toughness of the base layer is improved. Meanwhile, the addition of microalloying elements addresses the issue of low material strength under low carbon conditions, enabling the base layer to achieve a yield strength of $\geq$ 500 MPa, a tensile strength of $\geq$ 640 MPa, a yield-to-tensile ratio of 0.75 to 0.85, and an impact energy at -40 °C of $\geq$ 190 J. All these properties exceed the performance requirements specified in the Chinese National Standard GB/T 19879-2015 *"Steel Plates for Building Structure"*.

In contrast to the steel for marine structure disclosed in Japanese Patent Application JP2011167002A (achieving corrosion resistance through painting), the present disclosure achieves 100% metallurgical bonding between the corrosion-resistant layer and the base layer through hot rolling, which eliminates the need for coating and provides a permanent corrosion-resistant solution.

Chinese Patent Application CN201210260231.7 introduces a nickel plate as an isolation layer between the cladding layer and the base layer to prevent the formation of TiC at the interface, resulting in a titanium-steel clad plate with an interfacial bonding rate of 99.6% to 100%. In contrast, the hot-rolled strip steel for building structure according to the present disclosure utilizes a low-carbon and microalloying design, which reduces the addition of Ni, thereby lowering production costs. Meanwhile, through process optimization such as heating and rolling, a transition layer with a certain thickness can be formed, and the formation of brittle phase TiC in the interfacial transition layer can be reduced, achieving complete metallurgical bonding with an interfacial bonding rate of 100%.

Chinese Patent Application CN201710769999.X employs a slab heating temperature of 500-700 °C and a total reduction rate of 60-70%, and the resulting steel plate achieves a maximum interfacial shear strength of 182 MPa. In contrast, the inventors of the present invention have thoroughly considered the influence of the high-temperature phase transformation of industrial pure titanium on corrosion resistance, as well as the strength and toughness control of base layer carbon steel. By integrating a low-carbon microalloying design and whole process optimization, the heating temperature of the composite slab is set in the range of 900 to 1000 °C. At such temperature, no phase transformation occurs in the corrosion-resistant layer, while ensuring complete dissolution of precipitates in the base layer carbon steel. During the controlled rolling process, the grains of the base layer are refined, and the strength and toughness of the base layer are improved. Meanwhile, the cumulative reduction rate is controlled to be $\geq$ 88%, to break the brittle phase of the interfacial transition layer and improve the interfacial shear strength.

Chinese Patent Applications CN201210260231.7 and CN201710769999.X primarily prevent the formation of brittle Ti compounds by introducing an additional nickel-based alloy isolation layer between titanium and carbon steel. In contrast, the present disclosure achieves a complete metallurgical bonding with an interfacial bonding rate of 100% without adding an isolation layer, through compositional and process designs. In addition, the hot-rolled strip steel for building structure of the present disclosure differs from the two aforementioned patent applications in the slab assembly approach, and the material of the base layer carbon steel is also significantly different.

Through the process conditions according to the present disclosure, it is possible to ensure both the corrosion resistance of the industrial pure titanium of the corrosion-resistant layer and the mechanical properties of the base layer, thereby solving the challenge of incompatible processing windows between traditional titanium and carbon steel, which previously made it difficult to balance both requirements. Meanwhile, sufficient diffusion of elements in the base layer and the corrosion-resistant layer is controlled to form an interfacial transition layer of not more than 8 $\mu$m. This layer has a microstructure of fine grains with an average grain size of 15 to 40 $\mu$m and comprises precipitated particles (Ti,Nb)C smaller than 120 nm, which strengthens the interfacial bonding performance and ensures an interfacial shear strength of $\geq$ 263 MPa, significantly exceeding the interfacial shear strength of 182 MPa in Chinese Patent Application CN201710769999X.

The process of Chinese Patent Application CN201811327623.4 utilizes warm rolling to achieve cladding, followed by a two-stage heat treatment, including a primary annealing at 500-600 °C for 20-60 minutes and a recrystallization annealing at 680-700 °C for 30-120 minutes. Notably, it involves a manufacturing method for clad titanium-steel plate with a non-hot-rolled cladding approach, which is completely different from the manufacturing method according to the present disclosure.

The process of Chinese Patent Application CN201510543767.3 utilizes a heating temperature of 850-900 °C, a finishing rolling temperature of 700 °C or less, a single pass deformation of 20-30%, and a total rolling deformation of $\geq$ 90%. The resulting titanium-steel clad plate has a shear strength of greater than 240 MPa. The patent application requires high pass reduction and total deformation, which can easily lead to edge weld cracking, compromising the vacuum, making it difficult to clad, and resulting in poor rolling stability during the rolling process. In contrast, the single pass reduction rate of the present disclosure is controlled to 5% to 20%, which can effectively prevent the weld seams from cracking during the rolling process, ensure the vacuum degree inside the slab, and improve the interfacial shear strength along with rolling stability and success rate.

Chinese Patent Application CN201610994234.1 relates to a method for manufacturing titanium-steel clad plate. Firstly, the titanium plate and the steel plate are assembled to form a symmetrical multi-layer composite slab with a structure of steel plate-titanium plate-separating agent-titanium plate-steel plate. The cladding is carried out by roll cladding or explosive cladding. The slab after cladding is annealed and pickled using a continuous annealing and pickling line. It is first heated to 500-750 °C to recrystallize the core titanium plate and then heated to 950-1050 °C to recrystallize the base steel plate. However, the patent application does not specify the rolling process or the corrosion and structural properties of the obtained steel plate. The manufacturing process of the patent application is significantly different from the method according to the present disclosure. The method of the present disclosure does not require two-stage heat treatment, thus avoiding excessive diffusion of elements titanium, iron, and carbon and the formation of brittle substances such as iron-titanium intermetallic compounds and titanium carbide, which would deteriorate the interfacial shear strength.

Chinese Patent Application CN201710996925.X discloses a titanium-steel clad plate with a TA2 corrosion-resistant layer, with the thickness of the titanium cladding layer ranging from 0.2 to 1 mm. The manufacturing process involves: heating the seal-welded composite slab to 900-920 °C and keeping at this temperature, starting rolling at a temperature of 880-900 °C, finishing rolling at a temperature of 800 °C or more, and air cooling to room temperature. The obtained clad plate has a shear strength of 241 MPa. In contrast, the method according to the present disclosure employs a heating temperature of 900 to 1000 °C, a finishing rolling temperature of 780 to 850 °C, and utilizes water cooling with a controlled cooling rate in the range of 10 to 25 °C/s. The method according to the present disclosure enables production of the hot-rolled plate with TA1, TA2, TA3, and TA4 as corrosion-resistant layer, wherein the corrosion-resistant layer accounts for 1% to 10% of the total thickness of the composite slab, and the interfacial shear strength is $\geq$ 263 MPa.

The assembly approach and heating process of the method disclosed in Chinese Patent Application CN201710983322.6 are similar to those of Chinese Patent Application CN201710996925.X, with a single pass reduction rate of 25-30% and a total reduction rate of $\geq$ 85%. While controlling the single pass reduction rate and total reduction rate, the thickness of the titanium-steel clad plate is limited to 3 to 16 mm. The finishing rolling temperature is 800 °C or more, followed by air cooling to room temperature. For the resulting titanium-steel clad plate obtained through surface treatment, the titanium cladding layer has a thickness of $\leq$ 1 mm, and the steel plate has a strength of 345 MPa grade, which cannot meet the requirements for higher-strength grade structural components in building applications. In contrast, in the method according to the present disclosure, the single pass reduction rate is 5% to 20%, ensuring rolling stability. By designing the composition and process, the yield strength of the material can reach 500 MPa or more. Additionally, the method of the present disclosure differs significantly from that disclosed in Chinese Patent Application CN201710983322.6 in terms of both the thickness of the corrosion-resistant layer and the total thickness of the clad strip steel.

The hot-rolled strip steel for building structure according to the present disclosure can solve the problems faced when using stainless steel or carbon steel in the environment of sea wave splash zone. The hot-rolled strip steel for building structure can be effectively applied in the manufacturing of steel structural components for use in the environment of sea wave splash zone, for example: steel structural components in sea wave splash zone for facilities such as seaport terminals and offshore oil production platforms. The hot-rolled strip steel for building structure can meet the requirements for corrosion resistance and mechanical performance of these components in the sea wave splash zone, which greatly improves the applicability, safety, and durability of these structures, delivering substantial economic and social benefits.

**EXAMPLES**

The technical solutions of the present disclosure are described in further detail below in conjunction with examples and accompanying drawings. It should be understood that the following examples are provided solely to illustrate specific embodiments of the disclosure and shall not be construed as limiting the scope of protection. All reagents used in the examples are commercially available. Experimental methods for which specific conditions are not indicated in the examples were carried out according to conventional conditions known in the art, or according to the conditions recommended by the manufacturer.

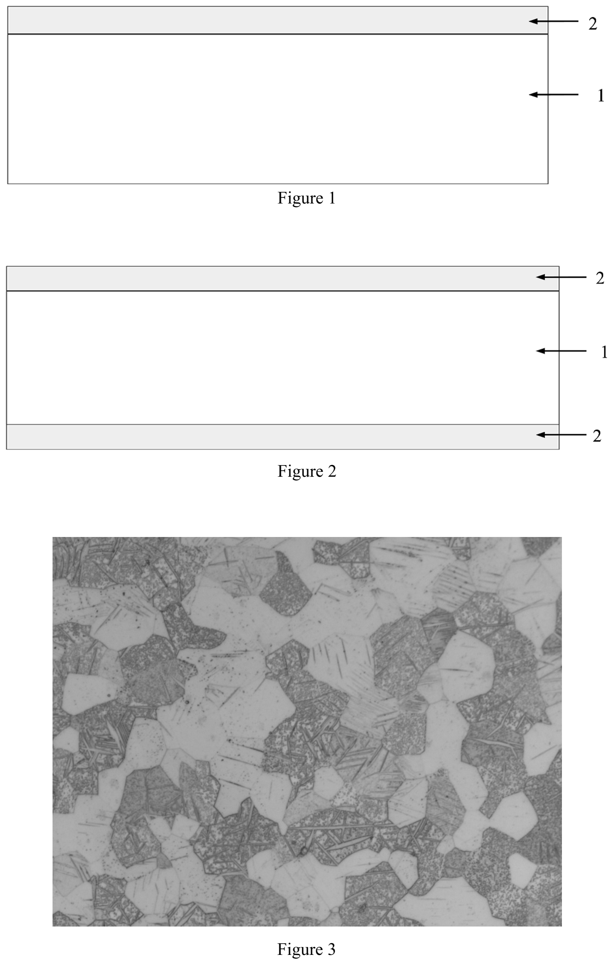

Referring to Figures 1, 2, and 4, schematic diagrams of two interlayer structures of the hot-rolled strip steel for building structure of the present disclosure are shown, wherein 1 is the base layer, 2 is the corrosion-resistant layer, and 3 is the interfacial transition layer.

The compositions of the base layer and the corrosion-resistant layer for Examples 1-8 and Comparative Examples 1-5 are listed in Table 1. Examples 1-8 and Comparative Examples 1-5 were prepared by the following steps:

1) smelting and casting
smelting and casting to give slabs for the base layer and the corrosion-resistant layer, based on the components of the base layer and the corrosion-resistant layer shown in Table 1;
2) assembling slabs
grinding and polishing surfaces of the slabs for the base layer and the corrosion-resistant layer, and performing peripheral weld sealing along contact surfaces of the slabs to form a composite slab comprising the base layer and the corrosion-resistant layer; performing vacuum treatment to a bonding interface after weld sealing;
3) heating and rolling the composite slab to form a steel strip, wherein:

the composite slab was heated to 900-1000 °C;
rough rolling was performed at a temperature of $\geq$ 880 °C; finish rolling was performed at a temperature of 760 to 850 °C, preferably 780 to 850 °C; a pass reduction rate was 5% to 20%, preferably 10% to 20%; and a cumulative reduction rate was $\geq$ 88%;

4) Cooling
after exiting a rolling mill stand, cooling the steel strip at a cooling rate of 10 to 25 °C/s to 300 to 450 °C, and then coiling at this temperature to produce the hot-rolled strip steel.

The specific parameters of the manufacturing processes for Examples 1-8 and Comparative Examples 1-5 are shown in Table 2.

Performance tests were then conducted on the base layer, corrosion-resistant layer, and clad steel plate in Examples 1-8 and Comparative Examples 1-5. Among these, the yield strength and tensile strength were measured in accordance with GB/T 6396-2008 *"Methods for Mechanical and Technological Testing of Clad Steel Plates"* and GB/T 228-2010 *"Metallic Materials-Tensile Testing at Ambient Temperature"*; the impact energy at -40 °C $KV_2$ in J (machine direction) was measured in accordance with GB/T 6396-2008 *"Clad steel plates - Mechanical and technological test"* and GB/T 229-2020 *"Metallic Materials-Charpy Pendulum Impact Test Method"*; and the grain size rating was carried out as follows: in accordance with GB/T 6394-2017 *"Determination of estimating the average grain size of metal"*, the intercept method was used to grade the grain size of ferrite microstructure in stainless steel and carbon steel, respectively.

The metallographic structures and mechanical properties of the base layer and corrosion-resistant layer, the thickness and mechanical properties of the interfacial transition layer for the clad steel plates of Examples 1-8 and Comparative Examples 1-5 are listed in Table 3.

Figure 3 shows the metallographic structure of the corrosion-resistant layer in Example 3. As shown in Figure 3, the corrosion-resistant layer in Example 3 exhibited a metallographic structure of single-phase, equiaxed $\alpha$-Ti grains with an average grain size of 105.6 $\mu$m.

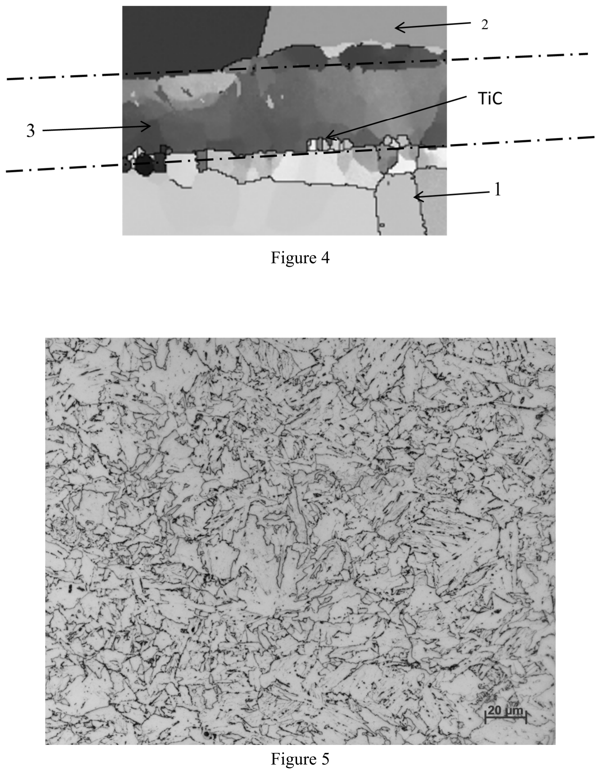

Figure 4 shows the interfacial transition layer of Example 3. As shown in Figure 4, the thickness of the interfacial transition layer 3 was 6.9 $\mu$m, in which the discontinuous fine particles were TiC with a size of less than 120 nm.

Figure 5 shows the metallographic structure of the base layer in Example 3. As shown in Figure 5, the metallographic structure of the base layer carbon steel in Example 3 was granular bainite and lath bainite.

Further, the clad steel plates in Examples 1-8 and Comparative Examples 1-5 were tested for corrosion resistance, and the results are shown in Table 4. The corrosion resistance performance was specifically tested as follows: the coupon specimens of clad steel plate in Examples 1-8 and Comparative Examples 1-5 were placed in the sea wave splash zone of South China Sea (different placement points were selected, namely Scenarios 1 to 7 respectively) for 6 months, after which corrosion conditions were observed and recorded.

Due to the use of non-compliant composition design and thermal processing conditions, some properties of the clad steel plates of Comparative Examples 1-5 failed to meet the use requirements (performance parameters were not within the scope of the invention). Specifically:

The Cr content in Comparative Example 1 was too high and failed to meet the compositional formula (0.9% ≤ Cu+Ni ≤ 1.45%; and 2(C+N) ≤ Ti+Nb+Cr+Mo ≤ 1.90%), which cannot effectively hinder the formation of carbides. The interfacial transition layer thickness was too thick, the bonding strength was insufficient, and the corrosion resistance was poor.

The Al content of Comparative Example 2 was not within the scope of the present invention, and the finishing rolling temperature and cooling rate were not within the scope of the present invention, resulting in coarse grains. Its impact performance failed to meet the requirements, and its corrosion resistance was poor.

The Cr content of Comparative Example 3 was too high, and the coiling temperature was not within the scope of the present invention. Thus, its yield strength and tensile strength failed to meet the requirements.

The Al content and Cu content of Comparative Example 4 were not within the scope of the present invention, and the cumulative reduction rate was not within the scope of the present invention. Thus, its tensile strength, yield-to-tensile ratio, and impact performance failed to meet the requirements, and its corrosion resistance was poor.

The heating temperature, finishing rolling temperature, and cooling rate of Comparative Example 5 were not within the scope of the present invention. Due to the excessively high heating temperature, β-Ti cannot be completely eliminated in subsequent processing and cooling processes, resulting in a high corrosion rate.

In contrast, in Examples 1-8, the base layer exhibited a yield strength of ≥ 500 MPa, a tensile strength of ≥ 640 MPa, a yield-to-tensile ratio of 0.75 to 0.85, and an impact energy at -40 °C of ≥ 190 J, and the corrosion-resistant layer exhibited a corrosion rate against sea wave splash of ≤ 0.006 mm/year.

**Table 1** (the balance being Fe and inevitable impurities) Unit: weight percentage (wt%)

| | Base layer | | | | | | | | | | | Material of corrosion-resistant layer |
| --- | --- | --- | --- | --- | --- | --- | --- | --- | --- | --- | --- | --- |
| | C | Si | Mn | Al | Ti | Nb | Cu | N | Ni | Cr | Mo | |
| Example 1 | 0.071 | 0.15 | 1.5 | 0.024 | 0.012 | 0.061 | 0.21 | 0.0012 | 1.18 | 1.59 | 0.21 | TA4 |
| Example 2 | 0.098 | 0.26 | 1.3 | 0.033 | 0.011 | 0.073 | 0.40 | 0.0005 | 0.52 | 0.92 | 0.32 | TA2 |
| Example 3 | 0.091 | 0.3 | 1.6 | 0.028 | 0.017 | 0.056 | 0.25 | 0.0024 | 1.11 | 1.24 | 0.34 | TA2 |
| Example 4 | 0.063 | 0.19 | 1.1 | 0.050 | 0.015 | 0.073 | 0.33 | 0.0035 | 0.85 | 0.81 | 0.49 | TA3 |
| Example 5 | 0.055 | 0.22 | 1.2 | 0.039 | 0.018 | 0.030 | 0.22 | 0.0021 | 1.03 | 1.36 | 0.41 | TA4 |
| Example 6 | 0.087 | 0.29 | 1.0 | 0.044 | 0.010 | 0.046 | 0.31 | 0.0049 | 0.87 | 1.54 | 0.25 | TA1 |
| Example 7 | 0.061 | 0.24 | 1.4 | 0.048 | 0.014 | 0.098 | 0.34 | 0.0050 | 0.73 | 1.02 | 0.39 | TA1 |
| Example 8 | 0.078 | 0.18 | 1.8 | 0.029 | 0.016 | 0.083 | 0.26 | 0.0008 | 0.67 | 1.15 | 0.27 | TA2 |
| Comparative Example 1 | 0.062 | 0.15 | 1 | 0.023 | 0.015 | 0.10 | 0.36 | 0.0006 | 0.53 | **1.61** | 0.5 | TA2 |
| Comparative Example 2 | 0.055 | 0.19 | 1.6 | **0.056** | 0.018 | 0.03 | 0.27 | 0.0048 | 1.17 | 0.85 | 0.4 | TA1 |
| Comparative Example 3 | 0.092 | 0.25 | 1.5 | 0.049 | 0.01 | 0.02 | 0.33 | 0.0016 | 0.85 | **1.66** | 0.4 | TA3 |
| Comparative Example 4 | 0.087 | 0.29 | 1.2 | **0.051** | 0.012 | 0.05 | **0.45** | 0.0023 | 0.73 | 0.97 | 0.3 | TA4 |
| Comparative Example 5 | 0.069 | 0.22 | 1.3 | 0.033 | 0.014 | 0.03 | 0.27 | 0.0026 | 0.86 | 1.42 | 0.2 | TA4 |

**Table 2**

| | Thickness of composite slab [mm] | Thickness of corrosion-resistant layer [mm] | Heating temperature [°C] | Rough rolling temperature [°C] | Finish rolling temperature [°C] | Pass reduction rate [%] | Cumulative reduction rate [%] | Cooling rate [°C/s] | Coiling temperature [°C] | Thickness of finished product [mm] |
|---|---|---|---|---|---|---|---|---|---|---|
| Example 1 | 232 | 3 | 942 | 889 | 789 | 10 | 95.3 | 18 | 395 | 11 |
| Example 2 | 296 | 20 | 963 | 896 | 823 | 20 | 95.9 | 13 | 356 | 12 |
| Example 3 | 284 | 12 | 998 | 899 | 790 | 19 | 96.8 | 12 | 402 | 9 |
| Example 4 | 212 | 8 | 912 | 882 | 845 | 8 | 98.6 | 25 | 450 | 3 |
| Example 5 | 190 | 18 | 979 | 894 | 813 | 5 | 92.1 | 24 | 302 | 15 |
| Example 6 | 265 | 26 | 923 | 884 | 762 | 13 | 95.8 | 19 | 433 | 11 |
| Example 7 | 167 | 10 | 953 | 897 | 850 | 15 | 91.6 | 15 | 333 | 14 |
| Example 8 | 196 | 19 | 906 | 881 | 782 | 16 | 96.9 | 16 | 423 | 6 |
| Comparative example 1 | 145 | 22 | 911 | 887 | 812 | 17 | 89.0 | 16 | 312 | 16 |
| Comparative example 2 | 224 | 21 | 905 | 894 | **730** | 17 | 95.5 | **5** | 396 | 10 |
| Comparative example 3 | 176 | 12 | 923 | 888 | 823 | 13 | 95.5 | 10 | **500** | 8 |
| Comparative example 4 | 110 | 17 | 978 | 893 | 792 | 5 | **85.5** | 25 | 412 | 16 |
| Comparative example 5 | 231 | 0.8 | **1160** | 920 | **900** | 19 | 93.1 | 9 | 385 | 16 |

**Table 3**

| | | | Base layer | | | | | | | | Interfacial transition layer | |
| | | | Yield strength [MPa] | | Tensile Strength [MPa] | | Yield-to-tensile ratio | | Impact energy at -40 °C $KV_2$ [J] (machine direction) | Thickness of interfacial transition layer [$\mu$m] | Shear strength [MPa] |
| | Metallographic structure | Effective grain size [$\mu$m] | Transverse direction | Machine direction | Transverse direction | Machine direction | Transverse direction | Machine direction | | | |
|---|---|---|---|---|---|---|---|---|---|---|---|
| Example 1 | granular bainite+ lath bainite | 9.5 | 555 | 566 | 656 | 716 | 0.85 | 0.79 | 247 | 7.8 | 282 |
| Example 2 | granular bainite+ lath bainite | 8.5 | 556 | 576 | 687 | 734 | 0.81 | 0.78 | 200 | 6.6 | 276 |
| Example 3 | granular bainite+ lath bainite | 8.6 | 538 | 510 | 671 | 640 | 0.80 | 0.80 | 254 | 6.9 | 263 |
| Example 4 | granular bainite+ lath bainite | 10 | 531 | 528 | 682 | 697 | 0.78 | 0.76 | 268 | 5.7 | 278 |
| Example 5 | granular bainite+ lath bainite | 9.2 | 520 | 531 | 657 | 671 | 0.79 | 0.79 | 193 | 7.6 | 283 |
| Example 6 | lath bainite | 9.4 | 531 | 532 | 645 | 701 | 0.82 | 0.76 | 215 | 8.0 | 291 |
| Example 7 | lath bainite | 9.8 | 516 | 523 | 666 | 641 | 0.77 | 0.82 | 221 | 7.9 | 275 |
| Example 8 | granular bainite+ lath bainite | 8.5 | 534 | 556 | 712 | 731 | 0.75 | 0.76 | 253 | 5.3 | 284 |
| Comparative Example 1 | **a small amount of ferrite+bainite** | 10 | 591 | 556 | 698 | 676 | 0.85 | 0.82 | 210 | **<u>16</u>** | **<u>96</u>** |
| Comparative Example 2 | granular bainite+ lath bainite | <u>**17**</u> | 586 | 574 | 746 | 757 | 0.79 | 0.76 | <u>**113**</u> | 8 | 283 |

| | Base layer | | | | | | | | | Interfacial transition layer | |
| | | | Yield strength [MPa] | | Tensile Strength [MPa] | | Yield-to-tensile ratio | | Impact energy at -40 °C $KV_2$ [J] (machine direction) | Thickness of interfacial transition layer [μm] | Shear strength [MPa] |
| | Metallographic structure | Effective grain size [μm] | Transverse direction | Machine direction | Transverse direction | Machine direction | Transverse direction | Machine direction | | | |
| Comparative Example 3 | granular bainite+ lath bainite | 9 | **480** | **472** | **568** | **569** | 0.85 | 0.83 | 196 | 6.5 | 271 |
| Comparative Example 4 | **martensite** | 8 | 513 | 503 | **590** | **586** | **0.87** | **0.86** | **131** | 7.5 | 279 |
| Comparative Example 5 | granular bainite+ lath bainite | 7.8 | 528 | 513 | **633** | **626** | 0.83 | 0.82 | 266 | 8 | 281 |

EP 4 678 779 A1

**Table 4**

|  | Scenario 1 | Scenario 2 | Scenario 3 | Scenario 4 | Scenario 5 | Scenario 6 | Scenario 7 |
|---|---|---|---|---|---|---|---|
| Chloride ion concentration (%) | 3 | 38 | 32 | 16 | 8 | 35 | 12 |
| Temperature (°C) | 32 | 20 | 40 | 45 | 22 | 52 | 31 |
| Corrosion rate (mm/year) | | | | | | | |
| Example 1 | 0.002 | 0.003 | 0.005 | 0.006 | 0.001 | 0.005 | 0.003 |
| Example 2 | 0.002 | 0.003 | 0.006 | 0.005 | 0.002 | 0.005 | 0.003 |
| Example 3 | 0.002 | 0.004 | 0.004 | 0.003 | 0.002 | 0.005 | 0.003 |
| Example 4 | 0.001 | 0.002 | 0.004 | 0.003 | 0.002 | 0.006 | 0.002 |
| Example 5 | 0.002 | 0.004 | 0.005 | 0.006 | 0.001 | 0.006 | 0.002 |
| Example 6 | 0.001 | 0.002 | 0.003 | 0.005 | 0.001 | 0.005 | 0.003 |
| Example 7 | 0.001 | 0.003 | 0.004 | 0.006 | 0.001 | 0.005 | 0.003 |
| Example 8 | 0.002 | 0.004 | 0.005 | 0.005 | 0.002 | 0.006 | 0.002 |
| Comparative Example 1 | 0.002 | 0.003 | 0.004 | 0.006 | 0.002 | **0.007** | 0.002 |
| Comparative Example 2 | 0.002 | 0.004 | 0.004 | 0.006 | 0.002 | **0.007** | 0.002 |
| Comparative Example 3 | 0.002 | 0.004 | 0.005 | 0.006 | 0.003 | 0.005 | 0.003 |
| Comparative Example 4 | 0.003 | **0.009** | **0.008** | **0.009** | 0.003 | **0.010** | 0.003 |
| Comparative Example 5 | 0.003 | 0.005 | 0.005 | **0.007** | 0.002 | 0.004 | 0.002 |

It should be noted that the combinations of technical features in the present disclosure are not limited to those described in the claims or embodiments. All technical features disclosed herein may be freely combined or associated in any manner, unless such combinations result in contradictions.

Furthermore, the embodiments provided above are merely illustrative examples of the present disclosure. Obviously, the disclosure is not limited to these embodiments, and similar variations or modifications that can be directly derived or easily conceived by those skilled in the art based on the content disclosed herein shall fall within the protection scope of the present disclosure.

**Claims**

1. A hot-rolled strip steel for building structure, comprising a base layer, a corrosion-resistant layer, and an interfacial transition layer disposed between the base layer and the corrosion-resistant layer;
   wherein the base layer comprises, in addition to Fe and other inevitable impurities, the following chemical elements in mass percentages:

   C: 0.050-0.100%, Si: 0.15-0.30%, Mn: 1.0-1.8%, P: 0.0005-0.0030%, S: 0.0005-0.0100%, Cr: 0.80-1.60%, Ni: 0.50-1.20%, Cu: 0.20-0.40%, Al: 0.020-0.050%, Ti: 0.010-0.018%, Nb: 0.020-0.100%, N: 0.0005-0.0050%, and Mo: 0.20-0.50%; and
   the corrosion-resistant layer is made of industrial pure titanium, preferably TA1, TA2, TA3, or TA4.

2. The hot-rolled strip steel for building structure according to claim 1, wherein the chemical composition of the base layer further satisfies the following relationships:

$$0.9\% \leq \text{Cu+Ni} \leq 1.45\%;$$

and

$$2(\text{C+N}) \leq \text{Ti+Nb+Cr+Mo} \leq 1.90\%.$$

3. The hot-rolled strip steel for building structure according to claim 1 or 2, wherein the base layer comprises the following chemical elements in mass percentages:
C: 0.050-0.100%, Si: 0.15-0.30%, Mn: 1.0-1.8%, P: 0.0005-0.0030%, S: 0.0005-0.0100%, Cr: 0.80-1.60%, Ni: 0.50-1.20%, Cu: 0.20-0.40%, Al: 0.020-0.050%, Ti: 0.010-0.018%, Nb: 0.020-0.100%, N: 0.0005-0.0050%, and Mo: 0.20-0.50%, with the balance being Fe and other inevitable impurities.

4. The hot-rolled strip steel for building structure according to any one of claims 1-3, wherein the base layer has a microstructure of granular bainite and/or lath bainite, with an effective grain size of $\leq 10~\mu$m.

5. The hot-rolled strip steel for building structure according to any one of claims 1-4, wherein the base layer has a yield strength of $\geq 500$ MPa, a tensile strength of $\geq 640$ MPa, a yield-to-tensile ratio of 0.75 to 0.85, and an impact energy at -40 °C of $\geq 190$ J.

6. The hot-rolled strip steel for building structure according to any one of claims 1-5, wherein the corrosion-resistant layer has a microstructure of single-phase, equiaxed $\alpha$-Ti.

7. The hot-rolled strip steel for building structure according to any one of claims 1-6, wherein the corrosion-resistant layer has a corrosion rate against sea wave splash of $\leq 0.006$ mm/year.

8. The hot-rolled strip steel for building structure according to any one of claims 1-7, wherein the interfacial transition layer has a thickness of $\leq 8~\mu$m and an average grain size of 15 to 40 $\mu$m, the interfacial transition layer comprises precipitated particles of (Ti,Nb)C smaller than 120 nm, and the interfacial transition layer has an interfacial shear strength of $\geq 263$ MPa.

9. The hot-rolled strip steel for building structure according to any one of claims 1-8, wherein the hot-rolled strip steel has a thickness of 3 to 16 mm.

10. The hot-rolled strip steel for building structure according to any one of claims 1-9, wherein the base layer of the hot-rolled strip steel has a yield strength of $\geq 500$ MPa, a tensile strength of $\geq 640$ MPa, a yield-to-tensile ratio of 0.75 to 0.85, and an impact energy at -40 °C of $\geq 190$ J; the corrosion-resistant layer has a corrosion rate against sea wave splash of $\leq 0.006$ mm/year; and an interfacial shear strength is $\geq 263$ MPa.

11. A method for manufacturing the hot-rolled strip steel for building structure according to any one of claims 1-10, comprising the following steps in sequence:

1) smelting and casting
smelting and casting to give slabs for the base layer and the corrosion-resistant layer, based on the components of the base layer and the corrosion-resistant layer as defined in any one of claims 1-3, respectively;
2) assembling slabs
grinding and polishing surfaces of the slabs for the base layer and the corrosion-resistant layer, and performing peripheral weld sealing along contact surfaces of the slabs to form a composite slab comprising the base layer and the corrosion-resistant layer; performing a vacuum treatment to a bonding interface after weld sealing;
3) heating and rolling the composite slab to form a steel strip, wherein:

the composite slab is heated to 900-1000 °C;
rough rolling is performed at a temperature of $\geq 880$ °C; finish rolling is performed at a temperature of 760 to 850 °C, preferably 780 to 850 °C; a pass reduction rate is 5% to 20%, preferably 10% to 20%; and a cumulative reduction rate is $\geq 88\%$;

4) cooling

after exiting a rolling mill stand, cooling the steel strip at a cooling rate of 10 to 25 °C/s to 300 to 450 °C, and then coiling at this temperature to produce the hot-rolled strip steel.

12. The method according to claim 11, wherein in step 2), a thickness of the corrosion-resistant layer is 1% to 10% of a thickness of the composite slab; and/or in step 3), the interfacial transition layer formed between the base layer and the corrosion-resistant layer has a thickness of $\leq 8$ $\mu$m.

Figure 1

Figure 2

Figure 3

Figure 4

Figure 5

## INTERNATIONAL SEARCH REPORT

| International application No. |
| --- |
| **PCT/CN2024/082496** |

**A. CLASSIFICATION OF SUBJECT MATTER**

C22C38/50(2006.01)i; B32B15/01(2006.01)i; C21D8/02(2006.01)i

According to International Patent Classification (IPC) or to both national classification and IPC

**B. FIELDS SEARCHED**

Minimum documentation searched (classification system followed by classification symbols)

IPC: C22C38, B32B15, C21D8

Documentation searched other than minimum documentation to the extent that such documents are included in the fields searched

Electronic data base consulted during the international search (name of data base and, where practicable, search terms used)

CNKI, DWPI, CNABS: 结构钢, 热轧, 带钢, 基层, 耐腐蚀层, 铬, 镍, 铜, 铝, 钛, 铌, 钼, 贝氏体, 强度, 冲击功, 厚度, 温度, 压下率, 过渡层, structural steel, hot rolled, strip steel, base layer, corrosion resistant layer, chromium, nickel, copper, aluminum, titanium, niobium, molybdenum, bainite, strength, impact work, thickness, temperature, reduction rate, transition layer

**C. DOCUMENTS CONSIDERED TO BE RELEVANT**

| Category* | Citation of document, with indication, where appropriate, of the relevant passages | Relevant to claim No. |
| --- | --- | --- |
| Y | WO 2023065805 A1 (NANJING IRON & STEEL CO., LTD.) 27 April 2023 (2023-04-27) claims 1-7 | 1-12 |
| Y | CN 113106327 A (BAOSHAN IRON & STEEL CO., LTD.) 13 July 2021 (2021-07-13) claim 1 | 1-12 |
| Y | CN 109628836 A (UNIVERSITY OF SCIENCE AND TECHNOLOGY BEIJING) 16 April 2019 (2019-04-16) claims 1-4 | 1-12 |
| Y | CN 115161552 A (BAOSHAN IRON & STEEL CO., LTD.) 11 October 2022 (2022-10-11) claims 1-9 | 1-12 |
| Y | KR 20060074050 A (POSCO) 03 July 2006 (2006-07-03) claim 1 | 1-12 |

☐ Further documents are listed in the continuation of Box C.　　☑ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **13 May 2024** | **16 May 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/082496**

| Patent document cited in search report | | | Publication date (day/month/year) | Patent family member(s) | | | Publication date (day/month/year) |
|---|---|---|---|---|---|---|---|
| WO | 2023065805 | A1 | 27 April 2023 | None | | | |
| CN | 113106327 | A | 13 July 2021 | None | | | |
| CN | 109628836 | A | 16 April 2019 | None | | | |
| CN | 115161552 | A | 11 October 2022 | None | | | |
| KR | 20060074050 | A | 03 July 2006 | KR | 101105113 | B1 | 16 January 2012 |

Form PCT/ISA/210 (patent family annex) (July 2022)

**REFERENCES CITED IN THE DESCRIPTION**

**Patent documents cited in the description**

- JP 2011167002 A
- CN 201210260231
- CN 201710769999X
- CN 201811327623
- CN 201510543767
- CN 201610994234
- CN 201710996925X
- CN 201710983322